Europäisches Patentamt

(19) European Patent Office

Office européen des brevets

(11) Numéro de publication: **0 238 427**
**B1**

(12) **FASCICULE DE BREVET EUROPEEN**

(45) Date de publication du fascicule du brevet: **23.05.90**

(51) Int. Cl.⁵: **A 23 L 3/26, B 65 B 55/16**

(21) Numéro de dépôt: **87420076.9**

(22) Date de dépôt: **18.03.87**

(54) **Dispositif industriel polyvalent pour traitement par irradiation gamma.**

(30) Priorité: **20.03.86 FR 8604316**

(43) Date de publication de la demande:
**23.09.87 Bulletin 87/39**

(45) Mention de la délivrance du brevet:
**23.05.90 Bulletin 90/21**

(84) Etats contractants désignés:
**BE CH DE GB LI NL**

(56) Documents cités:
**FR-A-2 252 255**

**VOEDINGSMIDDELENTECHNOLOGIE, vol. 15, no. 19, 20 septembre 1982, pages 71-73, NL; "Gammaster neemt nieuwe doorstralingsinstallatie in gebruik" FOOD MANUFACTURE, février 1986, pages 51,53,55, GB; "Irradiation in action"**

(73) Titulaire: **CONSERVATOME F-01120 DAGNEUX MONTLUEL (FR)**

(72) Inventeur: **Pellerin, Daniel 50, rue Boileau F-69006 Lyon (FR)**
Inventeur: **Bergeret, Marcel 29C Chemin de Montribloud F-69009 Lyon (FR)**
Inventeur: **Rubert, André 12D, chemin du Cimetière F-69100 Villeurbanne (FR)**
Inventeur: **Rochette, Vincent 34, rue du Luizet F-69100 Villeurbanne (FR)**

(74) Mandataire: **Séraphin, Léon et al PECHINEY 28, rue de Bonnel F-69433 Lyon Cedex 3 (FR)**

## Description

Domaine technique

L'invention concerne un dispositif industriel polyvalent d'irradiation gamma, à l'aide en particulier de sources de cobalt 60. Ce dispositif permet d'irradier simultanément une pluralité de produits homogènes ou hétérogènes en particulier des produits directement chargés sur leur palette de manutention d'origine.

Etat de la technique

Une grande variété de produits peuvent être soumis à irradiation gamma: produits ou matériels alimentaires, produits chimiques, particulièrement les polymères, ou métallurgiques, emballages, produits ou matériels hospitaliers, médicaux ou pharmaceutiques, etc ... dans différents buts: stérilisation, destruction de micro-organismes, modification de propriétés chimiques ou de surface, initiation et conduite de réactions chimiques, catalyse, activations ... Dans chacun de ces cas, le corps soumis à irradiation doit avoir reçu à l'issue du traitement une dose comprise entre un minimum et un maximum qui permet d'avoir l'effet recherché tout en évitant sa dégradation. Ce ratio

$$\frac{\text{dose mini}}{\text{dose maxi}}$$

exprimé en gray (ou en rad) est déterminé pour chaque corps en fonction du but poursuivi. Les doses absorbées dépendent de l'épaisseur du corps, de sa densité, de la durée d'irradiation, mais aussi de sa position en distance par rapport à la source, de la présence d'écran le séparant de la source, etc ... Elles dépendent également de la nature de la source (cobalt, cesium ...) de sa taille, de sa puissance ou de son intensité, de son âge, de sa forme, etc ...

L'irradiation se déroule à l'intérieur d'une enceinte formant écran de protection biologique, appelée par la suite la cellule. Celle-ci abrite la (ou les) source(s) gamma qui rayonne(nt) dans tout l'espace et se présente(nt) sous la forme d'une pluralité de crayons contenant la matière active, assemblés habituellement soit dans un cylindre, soit dans un ou plusieurs panneaux parallèles. Les produits à traiter défilent devant la (ou les) source(s), par exemple de chaque côté du panneau ou même entre les panneaux en un ou plusieurs passages, à la même ou à différentes hauteurs et sous différentes orientations.

Le transport des produits de l'extérieur de la cellule vers l'intérieur se fait par l'intermédiaire d'un labyrinthe et leur passage devant la (ou les) source(s) est assuré par un dispositif appelé convoyeur. Les convoyeurs doivent être équipés de telle façon qu'ils puissent accepter des colis de produits très divers en densité et en spécification de traitement. Les convoyeurs à terre ou aériens transportent les charges à irradier disposées sur 2 ou 3 hauteurs dans des praticables ou des balancelles. Pour assurer l'homogénéité d'irradiation, l'épaisseur horizontale de la charge ne dépasse pas en général 60 cm, et le convoyeur peut assurer un ou plusieurs passages dans la cellule, les produits étant permutés d'étages entre chacun d'eux.

Le chargement et le déchargement de ces petits conteneurs représentent des frais de manutention importants qui peuvent devenir dissuasifs quand la matière à irradier est elle-même peu coûteuse. Un système n'acceptant que des petits colis ne convient donc pas pour un traitement économique de charges épaisses. Il faut donc viser à traiter des charges de plus grande épaisseur en lots rassemblés n'ayant pas à subir d'éclatement pour être chargés dans les convoyeurs.

Le circuit du convoyeur à l'intérieur de la cellule est continu et tel que les charges y rentrant font deux ou trois trajets parallèlement au panneau source s'en approchant à chacun d'eux, passent ensuite de l'autre côté du panneau, ou entre les deux panneaux avant de passer de l'autre côté du deuxième panneau, et font de nouveau deux ou trois trajets parallèlement à cette deuxième face, mais cette fois s'en éloignant à chacun d'eux. Elles ressortent de la cellule par le labyrinthe. Dans certaines réalisations, les charges peuvent changer d'étage après chaque passage devant la source. Ce défilement continu permet de présenter successivement les deux faces du praticable ou de la balancelle au rayonnement.

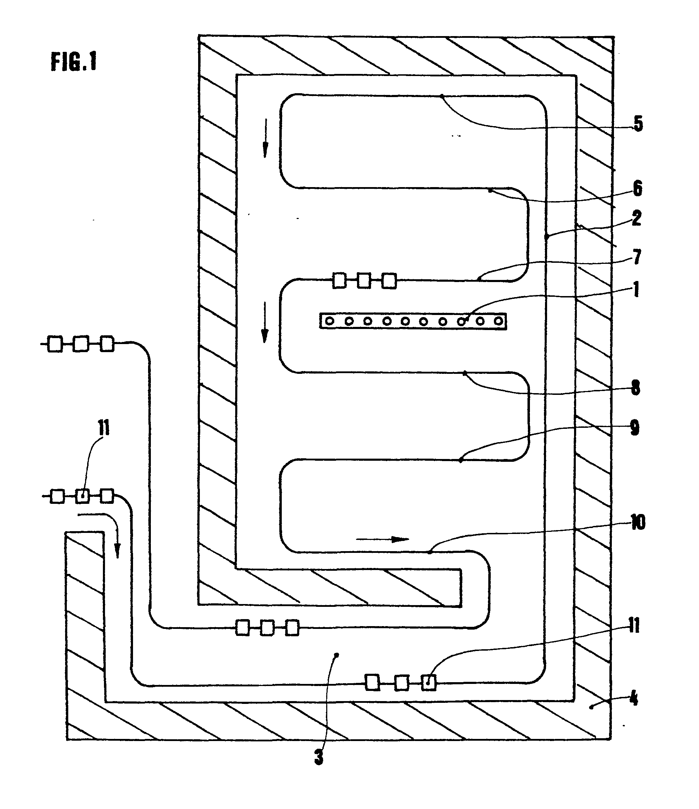

La figure 1 donne la vue schématique en plan d'un exemple de réalisation de cellule selon l'art antérieur. Elle contient une seule source (1) sous forme d'un panneau plan; le convoyeur (2) introduit les charges (11) par un labyrinthe (3), dans la cellule délimitée par son enceinte (4) et passe par exemple trois fois (5, 6, 7 puis 8, 9, 10) devant chaque face de la source avant de ressortir.

Avec un dispositif de ce genre, on voit qu'une charge déterminée passe systématiquement d'une zone peu exposée (5) par exemple, car éloignée de la source et protégée par l'écran formé par les rangs (6) et (7), à une zone très exposée (7) au contact direct de la source et inversement.

Ainsi si on veut charger les practicables du convoyeur de produits, hétérogènes en densité et/ou doses requises, on voit qu'il sera très difficile de régler les doses reçues en respectant les limites des ratios

$$\frac{\text{dose mini}}{\text{dose maxi}};$$

de même la dispersion des doses reçues peut se montrer très importante, la vitesse de défilement étant la même pour tous les produits et les effets d'écrans variables du fait de la diversité des produits.

Dans le cas de charges homogènes, le dispositif est mieux adapté ou plus facilement exploitable, à condition de faire varier à la demande la vitesse de défilement et/ou l'intensité du rayonnement en changeant la composition de la source.

Pour éviter les chargements et déchargements de produits dans les praticables ou balancelles, on peut envisager de les traiter directement sur leur palette d'origine servant habituellement à leur livraison et/ou manutention. Une telle charge unitaire présente alors une épaisseur horizontale de l'ordre du mètre, ce qui oblige à les irradier successivement sur plusieurs faces de façon à ce que le produit situé au centre de la palette ait aussi reçu sa dose dans les limites prévues.

L'irradiation des palettes est pratiquée par exemple, dans une réalisation connue (Voedingsmiddelentechnologie *15*, n°19, p. 71—73, 20 septembre 1980 et Food Manufacture p. 51—53—55, fev. 86), en utilisant une source cylindrique autour de laquelle un convoyeur fait circuler les palettes à l'aide d'un dispositif assurant la rotation des palettes, de façon à ce que toutes les faces desdites palettes soient irradiées, et assurant leur position en hauteur par rapport à la source. Un tel système présente l'inconvénient d'être complexe, peu productif, et de ne pas utiliser en permanence la source avec un bon rendement; en effet, d'une part, il est nécessaire de placer des écrans aux coins des palettes, qui sont des zones très exposées, pour éviter des surdosages, d'autre part, la quantité totale de produits entourant la source est faible: la source-crayon est entourée par une seule rangée, fermée en carré de convoyeur comportant au total quatre cages contenant chacune deux palettes.

L'objet de l'invention est de traiter une pluralité de produits de toutes dimensions, mais préférentiellement des produits sur palettes ou en autres conditionnements standards (caisses, palettes, conteneurs, bidons ...) ou autres objets non fractionnables de grandes dimensions désignés par la suite sous le vocable de colis volumineux, en résolvant les problèmes dûs à la grande épaisseur horizontale des charges individuelles en même temps qu'à leur diversité (densité, rapport des doses

$$\frac{mini}{maxi}$$

acceptables) tout en améliorant le rendement d'utilisation du rayonnement de la source.

Un autre objet est d'améliorer la productivité du traitement des colis de toutes dimensions, mais de préférence volumineux.

Un autre objet est de traiter simultanément des produits soit identiques, soit différents par les densités et/ou les doses requises et/ou les rapports de doses mini/maxi acceptables. Il est aussi, en cas de lots hétérogènes, d'accroître la souplesse de fonctionnement et de faciliter la gestion technique du traitement.

Un autre objet est d'augmenter l'homogénéité des doses reçues par les produits, autrement dit de diminuer l'écart entre les doses mini/maxi effectivement reçues.

Un autre objet est d'augmenter le rendement d'utilisation de la source en évitant l'emploi d'écran absorbant.

Description de l'invention

L'invention est un dispositif simple destiné à irradier simultanément par rayonnement gamma une charge constituée d'une pluralité de colis de produits de toutes dimensions, volumineux ou non, fractionnables ou non, livrés en petits colis ou cartons, ou en conditionnement de plus grandes dimensions tels que palettes, caisses, conteneurs, bidons ou autres ...dans le but d'éviter au maximum les manutentions ou fractionnements de charges, de traiter des charges homogènes ou hétérogènes tout en facilitant la gestion technique du procédé, c'est-à-dire le contrôle de la dose reçue par chacun des colis, et tout en augmentant l'homogénéité d'irradiation et le rendement d'utilisation de la source.

Il comporte des convoyeurs de liaison équipés de praticables, qui introduisent et évacuent les colis chargés sur un ou plusieurs niveaux (en général 3) dans la cellule par l'intermédiaire d'un labyrinthe, ladite cellule contenant les sources de rayonnement assemblées sous forme d'un ou plusieurs panneaux parallèles.

Il est caractérisé en ce que le dispositif de convoyage est disposé à l'intérieur de la cellule, quand elle comporte un seul panneau source, selon:

a) plusieurs convoyeurs rectilignes destinés au traitement par irradiation, indépendants les uns des autres, parallèles et de part et d'autre du panneau source, et plus longs que lui, de préférence trois de chaque côté.

b) deux convoyeurs de transfert des praticables perpendiculaires à la direction du panneau source, situés de chaque côté de ce mur au droit des convoyeurs décrits en a), qui alimentent et évacuent en produits à traiter lesdits convoyeurs a) individuellement, qui fonctionnent dans les deux sens et qui sont eux-mêmes alimentés et déchargés respectivement par les convoyeurs d'alimentation ou d'évacuation, ou des convoyeurs de liaison, communiquant avec l'extérieur à travers le labyrinthe.

Quand la cellule comporte deux ou plusieurs panneaux-sources parallèles, le dispositif de convoyage, en plus des éléments décrits ci-dessus, peut comporter aussi un ou plusieurs convoyeurs d'irradiation indépendants situés enre les panneaux-sources et parallèles à eux.

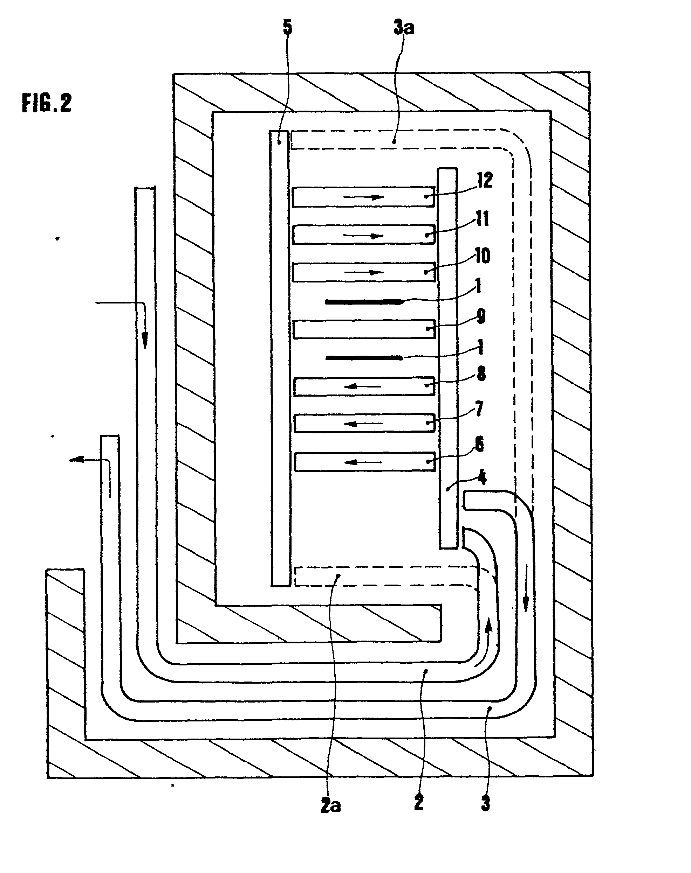

Le dispositif peut être illustré par la figure 2 qui représente une application particulière. En particulier, la cellule comporte deux panneaux-sources (1). L'alimentation de la cellule en praticable se fait par un convoyeur de liaison (2), l'évacuation des praticables par le convoyeur de liaison (3). Ces deux convoyeurs aboutissent dans le cas de la figure à un seul convoyeur de transfert (4); mais ils pourraient tout aussi valablement aboutir à l'autre convoyeur de tranfert (5), ou par des jeux d'aiguillage et de dérivation aboutir aux deux (solutions 2a et 3a), ou encore le convoyeur (3) pourrait aboutir seul au convoyeur de transfert 4 et/ou le 2 au 5, et vice-versa. Parmi les branches de convoyeurs destinées au traitement (6) à (12), une seule (9) se trouve entre les deux sources, mais il pourrait y en avoir plusieurs.

Les convoyeurs peuvent être aériens ou implantés au sol, leur vitesse peut être constante; par contre, il est avantageux pour améliorer le rendement de la source, la productivité et profiter pleinement des avantages du dispositif selon l'invention, d'avoir des vitesses variables en valeur et direction sur les convoyeurs de traitement et/ou de transfert.

Un perfectionnement du dispositif consiste à pouvoir régler individuellement la distance séparant chaque convoyeur de traitement du (ou des) panneau(x)-source. Le réglage peut être automatique ou manuel.

Le dispositif selon l'invention, bien qu'il puisse être utilisé comme celà a déjà été dit, pour irradier une grande variété de produits de toutes dimensions, est préférentiellement utilisé pour traiter des produits volumineux et particulièrement chargés sur palettes. Pour les transporter, le convoyeur peut véhiculer des dispositifs individuels, sorte de racks ou praticables, non décrits, dans lesquels prennent place une ou plusieurs palettes superposées sur plusieurs niveaux, en général 3, le tout formant un colis.

Le passage des praticables d'une branche de convoyeur à une autre se fait par un dispositif quelconque connu, tel que vérin, aiguillage, chariots de transfert . . . , non décrit ici.

Les dispositifs pour changer de niveau les palettes ne sont pas décrits. Pour une utilisation optimale du dispositif selon l'invention, assurant ainsi la sécurité de l'opération et l'allègement de son coût, et en particulier pour effectuer les transferts, les changements de niveaux et autres manutentions des colis à distance, il est avantageux de commander ces mouvements à distance par microprocesseurs et ordinateurs. En cas de besoin, des écrans absorbeurs peuvent être mis en place entre la ou les sources et les produits à irradier, mais, en règle générale, ce sont les produits situés sur les lignes de traitement intermédiaires, par exemple (8) et (10), qui jouent le rôle d'écran pour les autres, ce qui contribue à l'amélioration du rendement d'utilisation de la source et à sa souplesse d'utilisation.

Principe de fonctionnement

Les convoyeurs destinés au traitement sont utilisés séparément les uns des autres. Ces files peuvent fonctionner:

en défilement continu, c'est-à-dire qu'un colis utilisera successivement toutes les lignes.

en défilement parallèle, c'est-à-dire qu'on fait circuler simultanément des produits identiques ou différents sur chacune des lignes utilisées en parallèle.

en défilement mixte, certaines lignes pouvant servir à du défilement continu, d'autres étant utilisées en parallèle.

Les lignes 8 et 10 sont, en principe, réservées aux produits acceptant des doses élevées; s'ils sont absorbants, on peut alors traiter sur les convoyeurs (7)—(11) et (6)—(12) des produits n'ayant pas besoin ou ne supportant pas de doses élevées. s'ils sont peu absorbants, cela permet au contraire de mettre sur les lignes (7)—(11) et/ou (6)—(12) des produits nécessitant des doses plus élevées que dans le cas précédent. Sur les lignes (7)—(11) il peut ne subsister que 8% du rayonnement initial, et sur les lignes (6)—(12) que 1%.

Les vitesses variables de ces convoyeurs permettent aussi d'ajuster les temps d'exposition, donc les doses reçues en tenant toujours compte des effets d'écran dus aux produits présents sur les lignes intermédiaires.

Dans le cas de la figure 2, les praticables arrivant par le convoyeur (2), passent un par un sur le convoyeur de transfert (4) qui a reçu l'ordre d'acheminer chacun d'eux vers la ligne de traitement qu'il doit emprunter, déterminée par sa nature, la dose qu'il doit recevoir, et éventuellement l'absorption faite par les produits faisant écrans situés sur la ou les lignes entre le panneau-source et le convoyeur choisi.

En général, le praticable commence par passer sur une des lignes (6), (7) ou (8) puis, pour irradier son autre face, passe sur la ligne de transfert (5) qui l'amène sur la ligne de traitement (10), (11) ou (12) symétrique de la prédédente. Il passe ensuite sur le convoyeur de transfert (4) qui l'envoie sur le convoyeur d'évacuation (3). On peut aussi faire passer un même praticable sur plusieurs lignes en allant de la moins exposée à la plus exposée, par exemple en passant successivement sur les lignes 6—12—7—11—8—10—9— avant d'être évacué. C'est ce qui peut se passer lorsque la charge traitée dans la cellule est homogène. Ce cycle peut être raccourci en ne le commençant par exemple qu'à la ligne (7).

Ces cycles de traitement n'ayant été donnés qu'à titre illustratif, on voit bien qu'un très grand nombre d'autres circuits peuvent être organisés selon les besoins, et qu'ainsi le dispositif selon l'invention donne une très grande souplesse d'exploitation. En particulier, grâce à leur éloignement de la source, les lignes (6), (7), (11), (12) permettent de traiter des produits denses ne tolérant que des doses faibles qui correspondent en général à des ratios doses

$$\frac{\text{mini}}{\text{maxi}}$$

faibles.

On voit que l'on peut traiter simultanément des charges hétérogènes, c'est-à-dire que sur chacun des couples de lignes (6)—(12) ou (7)—(11) ou (8)—(10) les produits peuvent être différents. La charge peut être aussi homogène sur toutes ces lignes de la cellule.

Ce dispositif permet, grâce à sa souplesse, de traiter des colis de toutes dimensions, mais préférentiellement des colis volumineux et en particulier des palettes complètes de produits; il supprime les manutentions de chargement et déchargement des praticables ou balancelles de petites dimensions utilisés habituellement, et autorise l'irradiation de colis non divisibles de grandes dimensions. Par ce biais, le champ d'application de l'irradiation peut être étendu à des produits peu coûteux.

Cette amélioration de productivité est obtenue par un moyen simple faisant appel à des moyens élémentaires de manutention disponibles aisément sur le marché.

Par ailleurs, le rendement d'utilisation du rayonnement de la source peut être en permanence maximum en utilisant judicieusement sur les lignes de traitement des produits plus ou moins absorbants et/ou acceptant des doses plus ou moins élevées.

Le dispositif selon l'invention permet aussi de traiter des produits de forte densité, de même que des produits ne supportant que des doses mini faibles (inférieures à 0,01 Mrad) avec une source puissante (supérieure à $3 \times 10^6$ Curie).

**Revendications**

1. Dispositif simple destiné à irradier simultanément par rayonnement gamma une charge constituée d'une pluralité de produits de toutes dimensions, homogènes ou hétérogènes, fractionnables ou non, chargés sur des praticables convoyés, permettant une amélioration de la productivité et du rendement d'utilisation de la source, caractérisé en ce que le dispositif de convoyage des praticables est constitué, à l'intérieur d'une cellule d'irradiation contenant un seul panneau-source:

a) de plusieurs convoyeurs rectilignes d'irradiation indépendants les uns des autres, parallèles, situés de part et d'autre du panneau-source d'irradiation, et plus longs que lui.

b) de deux convoyeurs de transfert des praticables perpendiculaires à la direction du panneau-source, situés de chaque côté de ce panneau au droit des convoyeurs d'irradiation décrits en (a) et les alimentant et les déchargeant en produits à traiter, lesdits convoyeurs de transfert fonctionnant dans les deux sens et étant eux-mêmes alimentés ou déchargés par des convoyeurs communiquant avec l'extérieur de la cellule.

2. Dispositif simple destiné à irradier simultanément par rayonnement gamma une charge constituée d'une pluralité de produits de toutes dimensions, homogènes ou hétérogènes, fractionnables ou non, chargés sur des praticables convoyés, permettant une amélioration de la productivité et du rendement d'utilisation de la source, caractérisé en ce que la cellule contient deux ou plusieurs panneaux-sources parallèles et que le dispositif de convoyage des praticables est constitué à l'intérieur de la cellule:

a) de plusieurs convoyeurs rectilignes d'irradiation indépendants les uns des autres, parallèles, situés de part et d'autre des panneaux-sources et plus longs que lui, un ou plusieurs convoyeurs d'irradiation se situant entre les panneaux-sources.

b) de deux convoyeurs de transfert des praticables perpendiculaires à la direction des panneaux-sources, situés de chaque côté de ces panneaux au droit des convoyeurs d'irradiation décrits en (a) et les alimentant et les déchargeant en produits à traiter, lesdits convoyeurs de transfert fonctionnant dans deux sens et étant eux-mêmes alimentés ou déchargés par des convoyeurs communiquant avec l'extérieur de la cellule.

3. Dispositif, selon l'une quelconque des revendications 1 ou 2, caractérisé en ce que le dispositif de convoyage est implanté au sol.

4. Dispositif, selon l'une quelconque des revendications 1 ou 2, caractérisé en ce que le dispositif de convoyage est aérien.

5. Dispositif, selon l'une quelconque des revendications 1 ou 2, caractérisé en ce que la distance de chacun des convoyeurs d'irradiation aux panneaux-sources est réglable individuellement.

6. Dispositif, selon l'une quelconque des revendications 1 à 5, caractérisé en ce que les praticables convoyés sur les convoyeurs d'irradiation et/ou de transfert ont une vitesse constante.

7. Dispositif, selon l'une quelconque des revendications 1 à 5, caractérisé en ce que les praticables convoyés sur les convoyeurs d'irradiation et/ou de transfert ont une vitesse variable.

8. Dispositif, selon l'une quelconque des revendications 1 à 7, caractérisé en ce que les convoyeurs d'irradiation fonctionnent dans deux sens.

9. Dispositif, selon l'une quelconque des revendications 1 à 8, caractérisé en ce qu'il s'applique à des charges palettisées.

10. Dispositif, selon l'une quelconque des revendications 1 à 9, caractérisé en ce que les charges irradiées simultanément sont homogènes.

11. Dispositif, selon l'une quelconque des revendications 1 à 9, caractérisé en ce que les charges irradiées simultanément sont hétérogènes.

12. Dispositif, selon l'une quelconque des revendications 1 à 11, caractérisé en ce que ledit dispositif est piloté à l'aide de microprocesseurs ou ordinateurs.

**Patentansprüche**

1. Einfache Vorrichtung zur gleichzeitigen Bestrahlung einer Charge aus einer Vielzahl von homogenen oder heterogenen, teilbaren oder unteilbaren, sich auf förderbaren Transportmitteln befindenden Produkten unterschiedlicher Abmessungen mittels Gammastrahlung, zur Erhöhung der Produktivität und zur verbesserten Ausnutzung der Strahlungsquelle, dadurch gekennzeichnet, daß die sich im Inneren der eine einzige tafelförmige Quelle enthaltenden Bestrahlungskammer befindende Fördervorrichtung für die Transportmittel besteht:

a) aus mehreren geraden Bestrahlungsförderern, die voneinander unabhängig sind, parallel verlaufen, sich beidseits der tafelförmigen Bestrahlungsquelle befinden und länger als diese sind,

b) aus zwei Transportmittel-Übergabeförderern, die rechtwinklig zur Richtung der tafelförmigen Quelle verlaufen, sich beidseits der tafelförmigen Quelle in der Verlängerung der unter a) beschriebenen Bestrahlungsförderer befinden und diese mit zu behandelnden Produkten bestücken und entsorgen, welche Übergabeförderer in beiden Richtungen arbeiten und ihrerseits, mittels Förderern beschickt und entladen werden, die mit dem Raum außerhalb der Kammer in Verbindung stehen.

2. Einfache Vorrichtung zur gleichzeitigen Bestrahlung einer Charge aus einer Vielzahl von homogenen oder heterogenen, teilbaren oder unteilbaren, sich auf förderbaren Transportmitteln befindenden Produkten unterschiedlicher Abmessungen mittels Gammastrahlung, zur Erhöhung der Produktivität und zur verbesserten Ausnutzung der Strahlungsquelle, dadurch gekennzeichnet, daß die Bestrahlungskammer zwei oder mehr tafelförmige, parallele Quellen enthält und daß die sich im Inneren der Kammer befindende Fördervorrichtung für die Transportmittel besteht:

a) aus mehreren, geraden Bestrahlungsförderern, die voneinander unabhängig sind, parallel verlaufen, sich beidseits der tafelförmigen Bestrahlungsquellen befinden und länger als diese sind,

b) aus zwei Transportmittel-Übergabeförderern, die rechtwinklig zur Richtung der tafelförmigen Quellen verlaufen, sich beidseits der tafelförmigen Quellen in der Verlängerung der unter a) beschriebenen Bestrahlungsförderer befinden und diese mit zu behandelden Produkten beschicken und entsorgen, welche Übergabeförderer in beiden Richtungen arbeiten und ihrerseits mittels Förderern beschickt und entladen werden, die mit dem Raum außerhalb der Kammer in Verbindung stehen.

3. Vorrichtung nach einem der Ansprüche 1 oder 2, dadurch gekennzeichnet, daß die Fördervorrichtung bodenfest angeordnet ist.

4. Vorrichtung nach einem der Ansprüche 1 oder 2, dadurch gekennzeichnet, daß die Fördervorrichtung eine Hängefördervorrichtung ist.

5. Vorrichtung nach Anspruch 1 oder 2, dadurch gekennzeichnet, daß der Abstand jedes der Bestrahlungsförderer von den tafelförmigen Strahlungsquellen einzeln einstellbar ist.

6. Vorrichtung nach einem der Ansprüche 1 bis 5, dadurch gekennzeichnet daß die auf den Bestrahlungsförderern und/oder den Übergabeförderern geförderten Transportmittel eine konstante Geschwindigkeit haben.

7. Vorrichtung nach einem der Ansprüche 1 bis 5, dadurch gekennzeichnet, daß die auf den Bestrahlungsförderern und/oder den Übergabeförderern geförderten Transportmittel eine veränderliche Geschwindigkeit haben.

8. Vorrichtung nach einem der Ansprüche 1 bis 7, dadurch gekennzeichnet, daß die Bestrahlungsförderer in beiden Richtungen arbeiten.

9. Vorrichtung nach einem der Ansprüche 1 bis 8, dadurch gekennzeichnet, dab sie für palettierte Chargen verwendet wird.

10. Vorrichtung nach einem der Ansprüche 1 bis 9, dadurch gekennzeichnet daß die gleichzeitig bestrahlten Chargen homogen sind.

11. Vorrichtung nach einem der Ansprüche 1 bis 9, dadurch gekennzeichnet, daß die gleichzeitig bestrahlten Chargen heterogen sind.

12. Vorrichtung nach einem der Ansprüche 1 bis 11, dadurch gekennzeichnet, daß sie mit Hilfe von Mikroprozessoren oder Rechnern gesteuert wird.

## Claims

1. A single apparatus intended for the simultaneous gamma ray irradiation of a batch consisting of a plurality of homogeneous or heterogeneous products of all sizes, fractionable or otherwise, loaded on conveyor borne platforms, permitting of improved productivity and efficiency of source usage, characterised in that, inside an irradiation cell containing a single source panel, the means of conveying the platforms comprise:

a) a plurality of parallel rectilinear irradiation conveyors which are independent of one another, situated on either side of and longer than the irradiation source panel,

b) two conveyors for transferring platforms at right-angles to the direction of the source panel, situated on each side of the panel, at right-angles to the irradiation conveyors described in (a) and feeding them with and unloading from them the products which are to be treated, the said transfer conveyors functioning in both directions and being themselves loaded or unloaded by conveyors which communicate with the exterior of the cell.

2. A single apparatus intended for the simultaneous gamma ray irradiation of a batch consisting of a plurality of homogeneous or heterogeneous products of all sizes, fractionable or otherwise, loaded on conveyor borne platforms, permitting of improved productivity and efficiency of source usage, characterised in that the cell contains two or more parallel source panels and in that the means of conveying the platforms consist, inside the cell:

a) of a plurality of parallel rectilinear irradiation conveyors which are independent of one another, situated on either side of and longer than the irradiation source panels, one or a plurality of irradiation conveyors being situated between the source panels;

b) two conveyors for transferring platforms at right-angles to the direction of the source panels, situated on each side of the panels, at right-angles to the irradiation conveyors described in (a) and feeding them with and unloading from them the products which are to be treated, the said transfer conveyors functioning in both directions and being themselves loaded or unloaded by conveyors which communicate with the exterior of the cell.

3. An apparatus according to either of Claims 1 or 2, characterised in that the conveying means are embedded in the ground.

4. An apparatus according to either of Claims 1 or 2, characterised in that the conveying means are overhead.

5. An apparatus according to either of Claims 1 or 2, characterised in that the distance between each of the irradiation conveyors and the source panels is individually regulable.

6. An apparatus according to any one of Claims 1 to 5, characterised in that the platforms conveyed on the irradiation and/or transfer conveyors travel at a constant speed.

7. An apparatus according to any one of Claims 1 to 5, characterised in that the platforms conveyed on the irradiation and/or transfer conveyors travel at a variable speed.

8. An apparatus according to any one of Claims 1 to 7, characterised in that the irradiation conveyors function in two directions.

9. An apparatus according to any one of Claims 1 to 8, characterised in that it is applied to batches loaded on pallets.

10. An apparatus according to any one of Claims 1 to 9, characterised in that the simultaneously irradiated batches are homogeneous.

11. An apparatus according to any one of Claims 1 to 9, characterised in that the simultaneously irradiated batches are heterogeneous.

12. An apparatus according to any one of Claims 1 to 11, characterised in that the said apparatus is controlled by means of computers or microprocessors.

EP 0 238 427 B1

FIG.1

1

**FIG.2**